(19) Europäisches Patentamt
European Patent Office
Office européen des brevets

(11) **EP 2 661 944 B1**

(12) **EUROPÄISCHE PATENTSCHRIFT**

(45) Veröffentlichungstag und Bekanntmachung des Hinweises auf die Patenterteilung:
**10.08.2016   Patentblatt 2016/32**

(21) Anmeldenummer: **11808561.2**

(22) Anmeldetag: **28.12.2011**

(51) Int Cl.:
*G01K 17/00* (2006.01)      *G05D 23/20* (2006.01)
*H05B 1/02* (2006.01)       *H05B 6/06* (2006.01)

(86) Internationale Anmeldenummer:
**PCT/CH2011/000309**

(87) Internationale Veröffentlichungsnummer:
**WO 2012/092683 (12.07.2012 Gazette 2012/28)**

(54) **INDUKTIONSKOCHGERÄT ZUM TEMPERATURGESTEUERTEN KOCHEN**

INDUCTION COOKING DEVICE FOR TEMPERATURE-CONTROLLED COOKING

APPAREIL DE CUISSON À INDUCTION DESTINÉ À UNE CUISSON PAR COMMANDE DE TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.01.2011   CH 34112011**

(43) Veröffentlichungstag der Anmeldung:
**13.11.2013   Patentblatt 2013/46**

(73) Patentinhaber: **Inducs A.G.**
**9100 Herisau (CH)**

(72) Erfinder:
• **THOMANN, Albert**
  **CH-9100 Herisau (CH)**

• **VOGEL, Andreas**
  **CH-9630 Wattwil (CH)**
• **FUCHS, Christian**
  **CH-8180 Bülach (CH)**

(74) Vertreter: **Frei Patent Attorneys**
**Frei Patentanwaltsbüro AG**
**Postfach 1771**
**8032 Zürich (CH)**

(56) Entgegenhaltungen:
EP-A2- 1 378 807      EP-A2- 1 420 613
DE-A1- 3 323 399      DE-A1-102004 033 115
GB-A- 2 191 024       GB-A- 2 404 293
US-A- 4 587 405       US-A- 6 150 637
US-A1- 2009 252 197

**Beschreibung**

Die Erfindung liegt auf dem Gebiet der elektrischen Geräte zum Erwärmen eines Geschirrs, insbesondere für die Gastronomie. Die Erfindung bezieht sich allgemein auf ein Verfahren zur Ermittlung der Temperatur eines Gegenstandes mit induktiven Eigenschaften, welcher mittels einer elektrischen Einrichtung erwärmt wird, wobei oberhalb der elektrischen Einrichtung ein Auflageelement angeordnet ist, welches eine Auflagefläche für den Gegenstand ausbildet.

Ferner bezieht sich die Erfindung auf ein elektrisches Gerät zur Erwärmung eines Gegenstandes mit induktiven Eigenschaften. Das Gerät enthält eine elektrische Einrichtung zur Erwärmung des Gegenstandes, ein oberhalb der elektrischen Einrichtung angeordnetes Auflageelement, welches eine Auflagefläche für den Gegenstand ausbildet..

**STAND DER TECHNIK**

In der professionellen Gastronomie beeinflusst die Temperatur und die Temperatur-führung die Qualität der zubereiteten Speisen massgeblich. Beispielsweise Fleisch, Fisch und Saucen müssen in einem sehr engen Temperaturbereich im Rahmen eines Kochvorganges zubereitet werden, damit die optimale Geschmacksentfaltung zur Geltung kommt. Daher ist eine optimale Temperaturführung beim Kochen von Lebensmitteln sehr wichtig. Unter Kochen soll an dieser Stelle im weiteren Sinne das Zubereiten von Lebensmitteln bzw. Speisen für Mensch und Tier durch Erwärmen derselbigen, wie z. B. Erhitzen von Flüssigkeiten (beispielsweise bis zum Siedepunkt), Braten, Garen, Schmoren, Dünsten, etc., verstanden werden. Wenn in der nachfolgenden Beschreibung erfindungsgemässe Verfahrensschritte sowie Weiterentwicklungen oder Abwandlungen davon im Zusammenhang mit einem Kochvorgang beschrieben werden, so soll diese Offenbarung ganz allgemein für das Aufwärmen und/oder Warmhalten von induktiven Gegenständen, wie z. B. Geschirr, welches beispielsweise Lebensmittel bzw. Speisen aufnimmt, gelten.

Eine optimale und insbesondere auch kontrollierte Temperaturführung ist jedoch nur erzielbar, wenn das Kochgerät den Temperaturzustand des Kochgeschirrbodens so präzise wie möglich, ohne Zeitverzögerung und möglichst kontinuierlich während des Kochvorganges erfassen und z. B. an den Benutzer weiterleiten oder damit eine Steuerungseinrichtung, welche den Kochvorgang steuert, einspeisen kann. Bei herkömmlichen thermischen Kochfeldern ist die permanente Erfassung der Temperatur des Kochgeschirrbodens nicht bekannt und die Temperaturführung beruht auf der Erfahrung des Benutzers. Einer der wenigen Kochzustände, bei welchem der Benutzer eine Information über die Temperatur erhält ist z. B. der Siedepunkt von Wasser bzw. einer wässrigen Flüssigkeit.

Es ist grundsätzlich möglich, unterhalb der Kochauflage, welche in der Regel eine Keramik- oder Glasplatte ist und die als Träger für das Kochgeschirr dient, Temperatursensoren anzubringen. Diese Temperatursensoren messen die Absoluttemperatur an der Unterseite der Kochauflage. In Abhängigkeit von der Dicke und der Wärmeleitfähigkeit der Kochauflage sowie der Dynamik des Kochvorganges bezüglich der Temperaturführung weichen jedoch die Temperaturmesswerte jeweils mehr oder weniger stark von der eigentlichen Temperatur des Kochgeschirrbodens ab. Daher entsprechen die Temperaturmesswerte in gewissen Phasen des Kochvorganges, insbesondere während des Erwärmens des Kochgeschirrbodens, nie der Temperatur des Pfannenbodens. Eine Messung der Temperatur des Kochgeschirrbodens in Echtzeit ist daher gar nicht möglich.

Diese Problematik ist auch bei Induktionskochgeräten vorhanden, da hier im Gegensatz zu thermischen Kochgeräten, das Kochgeschirr direkt erwärmt wird. Das Kochgut wiederum wird indirekt, jedoch mit einer gewissen zeitlichen Verzögerung durch das erwärmte Kochgeschirr erwärmt. Die Kochauflage wird hier, im Gegensatz zu einem thermischen Kochgerät, nicht direkt erwärmt, sondern lediglich indirekt durch thermische Rückleitung bzw. Rückstrahlung des Kochgeschirrs. Weist die Kochauflage überdies thermisch isolierende Eigenschaften aus, so ist die zeitliche Verzögerung mittels welcher sich die Unterseite der Kochauflage aufwärmt noch grösser. Eine Temperaturführung ausschliesslich durch Messung der Temperatur der Kochauflage mittels der genannten Temperatursensoren ist daher wenig tauglich und eignet sich höchsten für das Kochen bzw. Warmhalten bei einem konstanten Temperaturbereich ohne grosse Temperatursprünge.

Induktionskochgeräte umfassen in bekannter Weise eine Induktionsspule unter der Kochauflage, mittels welcher ein magnetisches Wechselfeld erzeugt wird. Das magnetische Wechselfeld wiederum induziert unter anderem Wirbelströme im Induktionskochgeschirr, insbesondere in dessen Boden, welche neben Hysterese - und Ummagnetisierungsverluste zur Erwärmung des Kochgeschirrs beitragen. Zur Erzeugung des magnetischen Wechselfeldes ist die Induktionsspule Teil eines Schwingkreises, der über Schaltungen angetrieben wird. Ferner ist es ebenfalls bekannt unterhalb der Kochauflage im Bereich der Induktionsspule eine Messeinrichtung mit einer Messspule vorzusehen, mittels welcher ein Induktionsmessschwingkreis erzeugt wird, welcher in Wechselwirkung mit dem Kochgeschirr steht. Dieser Messschwingkreis zeichnet sich durch eine Resonanzfrequenz aus, welche unter anderem von der Permeabilität bzw. Induktivität des Kochgeschirrs abhängig ist. Die Permeabilität des Kochgeschirrs wiederum ist von der Temperatur des zu erwärmenden Kochgeschirrs abhängig. Die Beziehung zwischen Resonanzfrequenz und Temperatur des Kochgeschirrs, insbesondere von dessen Boden, lässt sich für den relevanten Temperaturbereich durch eine lineare Funktion darstellen. Mit dieser Methode lässt sich ein temperaturgesteuerter Kochvorgang implementieren. Mit der Messung der Resonanzfrequenz können jedoch keine absoluten Temperaturwerte sondern nur Relativwerte ermittelt werden. Ferner ist die lineare Beziehung zwischen Resonanzfrequenz und Temperatur des Kochgeschirrs auch von dessen Induktivität, d.h. Permeabilität, abhängig, welche dem Benutzer des Induktionskochgerätes in der Regel nicht bekannt ist. D.h., die genannte physikalische Beziehung spiegelt sich in Abhängigkeit von der Beschaffenheit des Kochgeschirrs in unterschiedlichen Kennlinien mit z. B. unterschiedlichen Steigungen wieder.

Ausgehend von dieser Ausgangslage ist ein Verfahren bekannt, mittels welchem das Induktionskochgeschirr vor der erstmaligen Benutzung einem Eichprozess unterzogen wird. Ziel dieses Eichprozesses ist es, für das jeweilige Induktionskochgeschirr wenigstens zwei absolute Temperatureichwerte zu bestimmen, mittels welchen die lineare Kennlinie bzw. Funktion definiert werden kann. Da die Kennlinie, wie erwähnt, nahezu linear ist, sind zu dessen Bestimmung im Minimum zwei, möglichst weit auseinander liegende Temperaturmesswerte notwendig. Die Temperatureichwerte für das Induktionskochgeschirr sind z. B. über einen oder mehrere an der Unterseite der Kochgeschirrauflage angebrachten Temperatursensoren erfassbar. Da der Temperatursensor die Temperatur des Kochgeschirrs bzw. des Kochgeschirrbodens aus oben genannten Gründen mit zeitlicher Verzögerung wiedergibt, muss zur Bestimmung eines Temperatureichwertes die Temperatur des Kochgeschirrs für eine bestimmte Zeit auf einem konstanten Niveau gehalten werden, so dass das Auflageelement im Bereich des Temperatursensors die Temperatur des Induktionskochgeschirrs annehmen kann.

Der erste Temperatureichwert wird in der Regel zu Beginn des Erwärmungsvorganges gemessen, wenn die Temperatur des Induktionskochgeschirrs z. B. bereits die konstante Umgebungstemperatur angenommen hat. Auf diese Weise braucht man für den ersten Temperatureichwert, die Angleichung zwischen der Temperatur des Induktionskochgeschirrs und der Kochgeschirrauflage im Bereich des Temperatursensors nicht abzuwarten. Die nachfolgenden Temperatureichwerte werden jedoch jeweils nach entsprechenden Aufwärmschritten erfasst. Für das jeweilige Induktionskochgeschirr wird nun mittels der Temperatureichwerten die Kennlinie bzw. Funktion ermittelt und im Induktionskochgerät abgespeichert. Bei einer späteren Benutzung der bereits geeichten Pfanne braucht der Benutzer das Induktionskochgeschirr lediglich beim Induktionskochgerät zu identifizieren und das Induktionskochgerät zieht die dazugehörige Kennlinie zur Ausübung eines Temperaturgesteuerten Kochens hinzu.

Dieses Verfahren hat jedoch den Nachteil, dass jedes Induktionskochgeschirr vor der Benutzung beim Induktionskochgerät angemeldet werden muss. Dieses Vorgehen ist relativ umständlich und führt insbesondere im hektischen Betrieb einer Grossküche zu unnötigen Verzögerungen, Fehlidentifikationen von Kochgeschirr und folglich zu schlechteren Kochergebnissen. Überdies muss für einen fehlerfreien Betrieb der Küche das Personal entsprechend instruiert und geschult werden. Ein grosser Nachteil des Verfahrens liegt jedoch auch darin, dass die Ermittlung der Temperatureichwerte bei erstmaliger Benutzung des Geschirrs mit dem Induktionskochgerät unabhängig vom Kochvorgang, d.h. z. B. vor dem Kochen, erfolgen muss. Dies deshalb, weil während der Wartezeit, bis sich die Temperatur am Auflageelement an die Temperatur des Induktionskochgeschirrs angeglichen hat, die Temperatur des Induktionskochgeschirrs konstant gehalten werden muss. Dies würde den Kochvorgang so sehr behindern, dass die Ermittlung der Temperatureichwerte nicht während des Kochvorganges ausgeführt werden kann. Eine zusätzliche Eichung des Induktionskochgeschirrs in einem separat ausgeführten Eichverfahren bedeutet jedoch auch wieder einen Mehraufwand.

Die Veröffentlichungsschrift US 2009/0252197 A1 beschreibt ein Kochgerät mit einem Boden zur Auflage auf einer Kochplatte. Der Boden des Kochgeräts ist mit wärmeempfindlichen Mitteln mit einem temperaturabhängigen, elektrischen Widerstand ausgestaltet, welche erlauben, die Temperatur des Kochgeräts über die Kochplatte zu messen.

Die Veröffentlichungsschrift EP-A-1 420 613 beschreibt ein Verfahren und eine Vorrichtung zur thermischen Überwachung eines induktiv erwärmbaren Gargefässes. Hierzu wird die vom Gargefäss beeinflusste Frequenz des die induktive Erwärmung bewirkenden Wechselstroms überwacht.

## DARSTELLUNG DER ERFINDUNG

Es ist daher Aufgabe vorliegender Erfindung, ein Verfahren zur Ermittlung und Regelung der Temperatur eines Gegenstandes und insbesondere eine Methode zur Eichung eines Induktionsgeschirrs im Rahmen des genannten Verfahrens vorzuschlagen. Ferner ist es auch Aufgabe vorliegender Erfindung, ein Induktionskochgerät zur fortlaufenden Ermittlung und Regelung der Temperatur eines Induktionskochgeschirrs während eines Kochvorganges gemäss dem oben genannten Verfahren vorzuschlagen. Ziel der Erfindung soll sein, dass der Benutzer das Induktionsgeschirr vor der erstmaligen und auch vor der wiederholten Benutzung nicht jedes Mal in einem unabhängig ausgeführten Eichverfahren eichen muss. Ferner ist es auch das Ziel der Erfindung, dass der Benutzer das Induktionskochgeschirr nicht vor jeder wiederholten Benutzung gegenüber dem Induktionsgerät identifizieren muss.

Die Aufgabe wird durch das Verfahren nach Anspruch 1 und das elektrische Gerät nach Anspruch 14 gelöst. Die abhängigen Ansprüche umfassen bevorzugte Weiterbildungen und Ausführungsformen der Erfindung. Merkmale der Verfahrensansprüche bzw. Verfahrensmerkmale gemäss Beschreibung treffen auch auf die Vorrichtungsansprüche bzw. auf die Vorrichtung gemäss Beschreibung zu und umgekehrt. Die erfindungsgemässen Merkmale des Verfahrens und der Vorrichtung beziehen sich insbesondere auf die Temperatureichung von Induktionsgeschirr mit unterschiedlichen Induktivitäten.

Da das erfindungsgemässe Verfahren generell für Induktionsgeräte zutrifft, mittels welchen Gegenstände erwärmt werden, soll sich der Schutzbereich nicht auf ein mit Induktionskochgeschirr betriebenes Induktionskochgerät beschränken.

Nach dem erfindungsgemässen Verfahren wird also zur Bestimmung der Temperatur des Gegenstandes die temperaturabhängige Permeabilität des Gegenstandes oder die von dieser Permeabilität abhängige Resonanzfrequenz eines Induktionsmessschwingkreises gemessen wird, und mittels wenigstens einem am Auflageelement angebrachten Temperatursensor die absolute Temperatur des Auflageelementes gemessen, wobei aus den gemessenen absoluten Temperaturmesswerten direkt oder indirekt die Beziehung zwischen der Temperatur und Permeabilität bzw. Resonanzfrequenz des Gegenstandes ermittelt wird, und aus den gemessenen Permeabilitätswerten bzw. Resonanzfrequenzen über die aus den absoluten Temperaturmesswerten hergeleitete Beziehung fortlaufend die absolute Temperatur des Gegenstandes bestimmt wird.

Die elektrische Einrichtung ist insbesondere zur induktiven Erwärmung des Gegenstandes ausgelegt. Das dazugehörige elektrische Gerät ist bevorzugt ein Induktionsgerät. Die elektrische Einrichtung umfasst bevorzugt Mittel zur Erzeugung eines Induktionsschwingkreises, wie z. B. eine Induktionsspule, zwecks induktiven Erwärmens des Gegenstandes. Das elektrische Gerät kann auch ein herkömmliches thermisches Gerät mit z. B. einer Heizspule sein, über welche das Auflageelement erwärmt wird, welches wiederum den diesem aufliegenden Gegenstand erwärmt. Die Messung der Permeabilität bzw. der besagten Resonanzfrequenz des Gegenstandes kann also unabhängig von der Heizmethode erfolgen.

Das oberhalb der elektrischen Einrichtung angeordnete Auflageelement umfasst bevorzugt eine erste Seite, die als Auflagefläche für den Gegenstand dient, und eine zweiten Seite, die zur elektrischen Einrichtung hin gerichtet ist. Der wenigstens eine Temperatursensor ist bevorzugt an der zweiten Seite angeordnet.

Gemäss der Erfindung wird über eine Messeinrichtung die Resonanzfrequenz eines mit dem Gegenstand zusammenwirkenden Induktionsmessschwingkreises gemessen. Aus der gemessenen Resonanzfrequenz wird die Temperatur des Gegenstandes berechnet. Die Resonanzfrequenz steht, wie erwähnt, über eine mathematische Funktion in einer physikalischen Beziehung mit der

Temperatur des Gegenstandes, wobei die mathematische Funktion die Temperatur (T) und die Resonanzfrequenz (F) als Variabeln enthält. Diese Funktion wird nun durch Ermitteln von wenigstens zwei absoluten Temperatureichwerten des Gegenstandes bei jeweils unterschiedlichen Resonanzfrequenzen bestimmt, wobei wenigstens ein Temperatureichwert des Gegenstandes durch folgende Schritte ermittelt wird:

- Erwärmen des Gegenstandes auf ein höheres Temperaturniveau und konstant halten der Temperatur auf diesem Niveau;

- wenigstens einmaliges Messen der Temperatur am Auflageelement durch den wenigstens einen Temperatursensor zu einem Zeitpunkt, bei welchem die Temperatur konstant auf dem höheren Temperaturniveau gehalten wird;

- Berechnen des Temperatureichwertes, wobei der Berechnung ein lineares, zeitinvariantes System (LZI-System) zugrunde gelegt wird, mittels welchem der Temperatureichwert als Ausgangsgrösse einer Übertragungsfunktion des LZI-Systems aus wenigstens einem vom Temperatursensor am Auflageelement gemessenen Temperaturwert als Eingangsgrösse der Übertragungsfunktion berechnet wird.

In einer bevorzugten Weiterbildung der Erfindung erfolgt die Ermittlung des Temperatureichwertes auf Basis mehrerer Temperaturmesswerte durch folgende Schritte:

- Erwärmen des Gegenstandes auf ein höheres Temperaturniveau und konstant halten der Temperatur auf diesem Niveau;

- mehrmaliges Messen der Temperatur am Auflageelement durch den wenigstens einen Temperatursensor über eine Zeitperiode hinweg, bei welcher die Temperatur konstant auf dem höheren Temperaturniveau gehalten wird;

- Berechnen des Temperatureichwertes, wobei der Berechnung ein lineares, zeitinvariantes System (LZI-System) zugrunde gelegt wird, mittels welchem der Temperatureichwert als Ausgangsgrösse der Übertragungsfunktion des LZI-Systems aus mehreren in zeitlichem Abstand voneinander vom Temperatursensor am Auflageelement gemessenen Temperaturwerten als Eingangsgrössen der Übertragungsfunktion berechnet wird.

Die Erhöhung der Temperatur des Gegenstandes liegt bevorzugt in Form einer Sprungfunktion vor, so dass die vom Temperatursensor wenigstens eine gemessene Temperatur am Auflageelemente der Sprungantwort auf die Sprungfunktion entspricht. Die Übertragungsfunktion ist besonders bevorzugt eine Sprungantwort in Form eines PT1-Gliedes. Die Sprungantwort kann jedoch auch in Form eines PT2-Gliedes vorliegen, was die Berechnung des Temperatureichwertes jedoch erheblich umständlicher und auch unpräziser macht. Temperatureichwerte werden also bevorzugt dadurch ermittelt, indem die Temperatur des Gegenstandes sprunghaft von einem ersten auf ein zweites, höheres Temperaturniveau angehoben und danach konstant gehalten wird.

Bevorzugt wird der Temperatureichwert, welcher dem Endwert der Sprungantwort entspricht, aus Temperaturmesswerten, welche den Eingangsgrössen der Sprungantwort entsprechen, berechnet bevor der Endwert der Sprungantwort erreicht wird. Ein grosser Vorteil des erfindungsgemässen Verfahrens liegt daher darin, dass zur Bestimmung des Temperatureichwertes nicht mehr der Temperaturendwert der Sprungfunktion abgewartet werden muss.

Der Endwert der Sprungantwort wird bevorzugt aus einer Mehrzahl von Temperaturmesswerten durch ein Approximationsverfahren ermittelt. Das Approximationsverfahren kann z. B. ein Iterationsverfahren sein. Bevorzugt ist das Approximationsverfahren ein Verfahren nach der Methode der kleinsten Quadrate, wie nachfolgend noch näher erläutert wird.

In bevorzugter Weiterbildung der Erfindung wird der Temperatureichwert über einen Zeitabschnitt hinweg gemäss der oben genannten Vorgehensweise wiederholt aus den jeweils zuvor gemessenen Temperaturwerten des Temperatursensors berechnet. Je mehr Messwerte für die Berechnung zur Verfügung stehen, desto genauer kann der Temperatureichwert berechnet werden. Die Berechnungen werden bevorzugt solange mit einer wachsenden Anzahl von Temperaturmesswerten fortgeführt, bis diese einen genügend genau an die Ausgangsgrösse bzw. den Endwert der Übertragungsfunktion angenäherten Temperatureichwert ergeben.

Das Konstant-halten der Temperatur des Gegenstandes im Anschluss an eine Temperaturerhöhung geschieht bevorzugt durch ein Konstant-halten der Resonanzfrequenz über einen Regelkreis. Im Regelkreis wird die Resonanzfrequenz über die Leistungsabgabe an den Induktionsschwingkreis geregelt. D.h., die Temperatur des Gegenstandes und somit dessen Resonanzfrequenz werden über die Leistungsabgabe an den Induktionsschwingkreis gesteuert.

Ein Eichvorgang umfasst zweckmässig mehrere mittelbar oder unmittelbar nacheinander ausgeführte Eichschritte, wobei in jedem Eichschritt ein Temperatureichwert bestimmt wird. Ist den einzelnen Eichschritten jeweils ein Temperatursprung zugrunde gelegt, so ergeben mehrere, unmittelbar nacheinander ausgeführte Eichschritte einen treppenförmigen Temperaturverlauf.

In bevorzugter Weiterbildung der Erfindung werden mehrere Temperatureichwerte bestimmt, welche zur Bestimmung der durch die mathematische Funktion definierte Beziehung zwischen Temperatur des Gegenstandes und der Resonanzfrequenz hinzugezogen werden. Die Bestimmung dieser mathematischen Funktion erfolgt bevorzugt über ein Approximationsverfahren. Die mathematische Funktion selbst entspricht wie eingangs erwähnt in der Regel einer einfachen, linearen Beziehung zwischen der Temperatur des Gegenstandes und der Resonanzfrequenz. In diesem Fall kann die Ermittlung von zwei Temperatureichwerten zur Bestimmung der Funktion ausreichen, ohne dass ein Approximationsverfahren angewendet werden muss.

Die Temperatureichwerte werden bevorzugt während des Erwärmens des Gegenstandes, vorzugsweise bei Beginn der Erwärmung des Gegenstandes, ermittelt. Stehen die Eichwerte einmal fest und ist die mathematische Funktion, welche die Beziehung zwischen Temperatur des Gegenstandes und der Resonanzfrequenz definiert einmal bestimmt, so erfolgt die Bestimmung und Regelung der Temperatur des Gegenstandes fortan über die Regelung der Resonanzfrequenz. Einerseits kann über die Messung der aktuellen Resonanzfrequenz quasi in Echtzeit die Temperatur des Gegenstandes ermittelt und beispielsweise an den Benutzer über eine optische oder akustische Anzeige weitergegeben werden. Ferner kann nach Abschluss des Eichvorganges die Temperatur über die Resonanzfrequenz quasi in Echtzeit geregelt werden. Die Resonanzfrequenz und somit die Temperatur des Gegenstandes wird über die dem Induktionsschwingkreis zugeführten elektrischen Leistung geregelt. Die Regelgrösse, also die Temperatur bzw. Resonanzfrequenz, basiert auf Vorgabewerten. Diese Vorgabewerte können beispielsweise vom Benutzer über eine Eingabeeinheit eingespiesene Temperaturwerte oder Temperaturverläufe sein. Die Vorgabewerte können jedoch auch als Datenwerte in einem Datenspeicher des Induktionsgeräts abgelegt sein. So kann z. B. der Benutzer die Temperaturwerte z. B. für einen Kochvorgang oder komplette Programme, wie Kochprogramme, über die Eingabeeinheit in das Induktionsgerät einlesen. Ferner können jedoch auch in einem Speicher des Induktionsgeräts abgelegte Programme, wie Kochprogramme, mit Angaben über die Temperaturführung hinterlegt sein.

Nachfolgend wird die Ausführung des Eichverfahren bzw. der Eichschritte anhand einer konkreten Berechnungsmethode dargestellt. Den Eichschritten wird jeweils eine Sprungfunktion in der Form einer sprunghaften Temperaturerhöhung zugrunde gelegt, auf welche die Temperatur des Auflageelementes beim Temperatursensor mit einer Sprungantwort reagiert.

Die Sprungantwort eines PT1-Gliedes wird durch folgende Gleichung beschrieben:

$$y(t) = K(1 - e^{-\frac{t}{T}}) \qquad\qquad \text{Gleichung 1}$$

Die Sprungantwort ist durch die beiden Parameter K und T definiert. Der Verstärkungsfaktor K bestimmt den Endwert der Sprungantwort und die Zeitkonstante T die Geschwindigkeit, mit welcher der Endwert erreicht wird. Ein PT1-Glied trifft insbesondere dann zu, wenn der Gegenstand zumindest in jenem Bereich, in welchem der Temperatursensor am Auflageelement befestigt ist, direkt dem Auflageelement aufliegt, und es insbesondere kein Luftpolster zwischen Auflageelement und Gegenstand gibt.

Liegt der Gegenstand im Bereich des Temperatursensors nicht direkt dem Auflageelement auf und liegt beispielsweise noch ein Luftpolster dazwischen, so führt dies wegen den wärmeisolierenden Eigenschaften des Luftposters zu einer verzögerten Wärmeleitung. Die Sprungantwort hat aufgrund dieser Verzögerung die Form eines aperiodischen PT2-Gliedes. Die Sprungantwort eines solchen PT2-Gliedes wird durch folgende Gleichung beschrieben:

$$y(t) = K - \frac{K}{T_1 - T_2}(T_1 e^{-\frac{t}{T_1}} - T_2 e^{-\frac{t}{T_2}}) \qquad \text{Gleichung 2}$$

Bevorzugt wird jedoch eine Anordnung, bei welcher die Sprungantwort ein PT1-Glied ist. Stehen genaue Temperaturmesswerte der Sprungantwort eines PT1-Gliedes zur Verfügung, so kann der Temperatureichwert bereits bevor der Temperaturendwert der Sprungantwort erreicht ist, berechnet werden. Dadurch wird eine schnellere Eichung des Systems erreicht, da nicht mehr abgewartet werden muss, bis die Sprungantwort ihren Endwert erreicht hat. Dank dieser zeitlichen Optimierung des Eichschrittes kann der Eichvorgang in den Kochvorgang integriert werden, da die Temperaturbeeinflussung des Kochvorganges durch die nun zeitlich erheblich verkürzten Eichschritte auf ein vernachlässigbares Mass reduziert wird.

Theoretisch können die Parameter K, T der Sprungantwort eines PT1-Gliedes durch zwei Temperaturmesswerte bestimmt werden. Da die Temperaturmesswerte jedoch jeweils einen Messfehler aufweisen, müssen für eine genügende Genauigkeit mehr als zwei Temperaturmesswerte ermittelt werden. Ausgehend von diesen Temperaturmesswerten werden mittels eines Approximationsverfahrens die Parameter K, T berechnet. Dieses Approximationsverfahren kann z. B. ein Iterationsverfahren sein. D.h. der Endwert der Sprungantwort wird aus aktuellen Temperaturmesswerten durch ein Iterationsverfahren ermittelt, bevor das Auflageelement den Temperatur-Endwert der Sprungantwort erreicht hat.

Gemäss einer bevorzugten Ausführung der Erfindung wird der Temperatur-Endwert, d.h. der Temperatureichwert über ein Approximationsverfahren nach der Methode der kleinsten Quadrate ermittelt. Bei einer Approximation nach der Methode der kleinsten Quadrate werden die Parameter einer vorgegebenen Modellfunktion so dimensioniert, dass die Quadrate der Abweichungen aller Messwerte minimal werden. Diese Methode eignet sich insbesondere für Messwerte, die normalverteilt sind, wovon bei einer gemessenen Sprungantwort jeweils ausgegangen werden kann. Da die Gleichung 1 des PT1-Gliedes jedoch eine nichtlineare Modellfunktion ist, muss diese zuerst durch geeignete Substitution in eine lineare Funktion überführt werden. Damit nun für die Sprungantwort nach Gleichung 1 eine geeignete Substitution gefunden werden kann, muss die Sprungantwort zuerst abgeleitet werden. Die Ableitung der PT1-Glied Sprungantwort entspricht folgender Funktion:

$$y'(t) = \frac{K}{T} e^{-\frac{t}{T}}) \qquad \text{Gleichung 3}$$

mit der Substitution:

$$z(t) = \ln(y'(t)) \qquad \text{Gleichung 4}$$

erhält man die lineare Funktion:

$$z(t) = \ln\frac{K}{T} - \frac{t}{T} \qquad \text{Gleichung 5}$$

Die Substitution ist nur zulässig für positive Ableitungen der Sprungantwort. Die beiden Parameter:

$$x_0 = \ln \frac{K}{T} \qquad\qquad \text{Gleichung 6}$$

$$x_1 = -\frac{1}{T} \qquad\qquad \text{Gleichung 7}$$

lassen sich nun mit der Methode der kleinsten Quadrate nach folgender Gleichung berechnen:

$$x_0 = \bar{z} - x_1 \bar{t} \qquad\qquad \text{Gleichung 8}$$

$$x_1 = -\frac{\left(\sum_{i=1}^{n} t_i z_i\right) - n\bar{t}\bar{z}}{\left(\sum_{i=1}^{n} t_i^2\right) - n\bar{t}^2} \qquad\qquad \text{Gleichung 9}$$

Für das arithmetische Mittel gilt:

$$\bar{t} = -\frac{1}{n} \sum_{i=1}^{n} t_i \qquad\qquad \text{Gleichung 10}$$

Entspricht nun die Sprungantwort des Systems wie bereits erwähnt einem PT1-Glied, so nähern sich die Parameter K und T nach einigen Messpunkten einem Endwert. Die beiden Parameter T und K lassen sich nun aus Gleichung 6 und Gleichung 7 berechnen. Bei dieser Methode ist wichtig, dass der erste Messpunkt $y'(t)$ im Zeitpunkt von $t = 0$ liegt.

Um die Parameter T und K nach der oben erläuterten Methode zu berechnen, muss wie erwähnt die Ableitung der Sprungantwort gebildet werden. Diese lässt sich zum Zeitpunkt $t$ durch eine Approximation mit der Methode der kleinsten Quadrate und einer linearen Modellfunktion nach folgender Formel berechnen:

$$y'(t) = -\frac{\left(\sum_{i=-k}^{k} t_i y_i\right) - (2k+1)\bar{t}\bar{y}}{\left(\sum_{i=-k}^{k} t_i^2\right) - (2k+1)\bar{t}^2} \qquad\qquad \text{Gleichung 11}$$

Um eine möglichst hohe Genauigkeit der Ableitung zu erreichen, ist eine regelmässige zeitliche Erfassung von Messwerten (Temperatur und Resonanzfrequenz) wichtig. Die Messwerte könne z. B. im Sekundenabstand gemessen werden. Bei einem schnell reagierenden System kann die Ableitung bei gleichbleibender Genauigkeit aus weniger Messpunkten ermittelt werden als bei einem langsam reagierenden System. Es versteht sich von selbst, dass zur Bildung der Ableitung auch andere Algorithmen in Frage kommen.

Verschiedene Betriebszustände des Induktionsgeräts verlangen verschiedene Anwendungen des oben beschriebenen Algorithmus. Im Vordergrund steht die Bestimmung zweier möglichst weit auseinander liegenden Temperatureichwerte auf Basis zweier entsprechend ebenfalls auseinander liegenden Resonanzfrequenzen.

Im Allgemeinen beginnt der automatische Eichvorgang mit dem Start eines Erwärmungsvorganges bzw. Kochvorganges und dem Erkennen eines induktiven Gegenstandes bzw. Kochgeschirrs auf dem Auflageelement bzw. Kochfeld.

Zur Festlegung von Temperatureichwerten wird der Gegenstand jeweils auf eine stabile Temperatur erwärmt bzw. auf dieser gehalten, welche sich durch eine konstante Resonanzfrequenz des Schwingkreises auszeichnet. Der Eichvorgang bzw. ein Eichschritt beginnt erst, wenn sich eine stabile, d.h. konstante Resonanzfrequenz eingestellt hat und demzufolge die Temperatur des Gegenstandes bzw. des Kochgeschirrs konstant ist. Es versteht sich von selbst, dass primär derjenige Bereich des Gegenstandes bzw. des Geschirrs eine konstante Temperatur aufweisen muss, welcher in thermisch leitenden Kontakt mit dem Auflageelement ist. Dies ist z. B. der Pfannenboden. Der Start des Eichvorganges erfolgt mit der Einleitung des ersten Eichschrittes. Ein Eichschritt kann z. B. mit Erwärmung des Gegenstandes auf ein erstes, höheres Temperaturniveau erfolgen. Hierbei kann es sich um den ersten zweiten oder einen weiteren Eichschritt handeln.

Basiert ein Eichschritt auf der Erwärmung des Gegenstandes auf ein höheres Temperaturniveau, so zeichnet sich der Beginn dieses Eichschrittes durch Aufnahme von Temperaturmessungen mittels des Temperatursensors bzw. mit der Aufnahme der Auswertung der aktuell gemessenen Temperaturmesswerten aus, nachdem die zum Gegenstand gehörige Resonanzfrequenz wieder stabil ist, d.h. nachdem die Temperatur des Gegenstandes auf dem höheren Temperatur stabil ist. Es werden nun fortlaufend Temperaturmesswerte ermittelt, aus welchem über eine Zeitperiode hinweg fortlaufend Temperaturendwerte berechnet werden.

Da zu Beginn des Eichschrittes noch wenige Temperaturmesswerte vorliegen, wirkt sich die statistisch verteilte Messungenauigkeit noch wesentlich stärker auf den berechneten Endwert aus. Mit zunehmender Anzahl von Messpunkten entlang der Sprungfunktion und Annäherung der Temperaturmesswerten durch fortlaufende Erwärmung des Auflageelementes an die Endtemperatur nähert sich auch die berechnete Endtemperatur immer mehr der effektiven Endtemperatur der Sprungfunktion an. D.h. mit fortschreitender Temperaturmessung pendeln sich die berechneten Endtemperaturen bei der effektiven Endtemperatur ein, welches dem Endwert der Sprungfunktion entspricht. Sobald sich nun die berechneten Endwerte genügend nahe an die effektive Endtemperatur angenähert haben, wird der erste Eichschritt beendet, indem die Messung der Temperatur bzw. Auswertung der Temperaturmesswerte eingestellt werden. Die berechnete Endtemperatur wird als erste, zweite oder als eine weitere Eichgrösse der dieser zugrunde liegenden Resonanzfrequenz zugeordnet. Die Beendigung des Eichschrittes findet zeitlich deutlich vor dem Zeitpunkt statt, bei welchem das Auflageelement die Endtemperatur, also die effektive Eichtemperatur, erreicht hat.

Nach Abschluss dieses Eichschrittes wird der Gegenstand durch entsprechende Leistungsabgabe an den Induktionsschwingkreis zwecks Einleitung eines weiteren Eichschrittes bevorzugt auf ein nächst höheres und konstantes Temperaturniveau erwärmt. Der weitere Eichschritt wird analog zum vorangehenden Eichschritt erst eingeleitet, wenn der Gegenstand eine konstante Temperatur erreicht hat und die Resonanzfrequenz des Schwingkreises entsprechend stabil ist. Sobald dieser Zeitpunkt erreicht ist, wird in analoger Weise zum vorangehenden Eichschritt die Endtemperatur errechnet. Die errechnete Endtemperatur des weiteren Eichschrittes wird als weiterer Eichwert der dieser zugrunde liegenden Resonanzfrequenz zugeordnet. Theoretisch genügt die Erfassung von zwei Eichwerten, um die lineare Kennlinie zwischen Temperatur und Resonanzfrequenz des Gegenstandes zu definieren. Da jedoch die ermittelten Eichwerte jeweils mit einer gewissen Ungenauigkeit behaftet sind, ist auch die Festlegung der Kennlinie aus nur zwei Eichwerten mit einer gewissen Ungenauigkeit behaftet. Dies trifft insbesondere dann zu, wenn die Eichwerte nahe beieinander liegen, was z. B. bei einer unmittelbar aufeinander folgenden Erfassung von Eichwerten während eines Aufwärmvorganges, wie oben beschrieben, der Fall sein kann.

Daher werden bevorzugt mehr als zwei Eichwerte bestimmt. Grundsätzlich können während eines Aufwärmvorganges eine Vielzahl von Eichwerten ermittelt werden. Je mehr Eichwerte zur Verfügung stehen, desto genauer lässt sich die daraus abgeleitete Kennlinie bestimmen. Werden jedoch mehr als zwei Eichwerte zur Bestimmung der Kennlinie verwendet, so geschieht die Ermittlung der Kennlinie zweckmässig über eine Approximationsmethode. Dies kann z. B. die Methode der kleinsten Quadrate sein.

Der Eichprozess kann abgeschlossen werden, sobald genügend Eichwerte vorliegen. Die Dauer des Eichvorganges und die damit verbundene Anzahl ermittelter Eichwerte kann individuell festgelegt werden und hängt mitunter von der geforderten Genauigkeit der ermittelten Kennlinie sowie auch vom Ablauf des Aufwärm- bzw. Kochvorganges ab. Es kann natürlich auch vorgesehen sein, dass während eines Kochvorganges der Eichvorgang wiederholt werden kann, um so beispielsweise die aus den vorangehenden Eichvorgängen ermittelten Eichwerte um weitere Eichwerte zu ergänzen, um so die Genauigkeit der Kennlinie zu erhöhen. Auf diese Weise wird die Genauigkeit der Temperaturführung während des Kochvorganges laufend erhöht.

Da die einzelnen Eichschritte jeweils vor Erreichen der Sprungantwort beendet werden, ist die zeitliche Verzögerung, welche entsteht, wenn die Temperatur des Gegenstandes während eines Eichschrittes konstant gehalten werden muss, verhältnismässig gering. Der aus dem Eichvorgang resultierende abgestufte Erwärmungsvorgang weicht daher gegenüber einer kontinuierlichen und schnellen Erwärmung, was in der Regel gewünscht ist, nicht erheblich ab. Da der Eichvorgang bzw. die einzelnen Eichschritte die Temperaturführung während des Kochvorganges nicht sonderlich stören, kann der Eichvorgang beliebig lange dauern und während des Kochvorganges beliebig oft durchgeführt werden.

Sollte aufgrund der vorgegebenen Temperaturvorführung (z. B. schnelles und starkes Aufwärmen) in einer gewissen Phase des Kochvorganges kein Eichvorgang ausgeführt werden können, so wird die Eichung auf einen Zeitbereich während des Kochvorganges gelegt, in welchem die Vorgaben zur Temperaturführung einen Eichvorgang zulassen.

Es kann ferner vorkommen, dass sich die Kennlinie im Laufe des Kochvorganges verändert, z. B. durch Erhöhung der Geräteinnentemperatur. Für diesen Fall kann vorgesehen sein, dass das Induktionsgerät, z. B. die Gerätetemperatur, fortlaufend überwacht und die Eichwerte falls nötig korrigiert oder durch Einleitung eines neuen Eichvorganges neu ermittelt werden.

Der erste Eichwert kann je nach Ausgangsbedingungen auf unterschiedliche Weise erfasst werden. Weisen z. B. der Gegenstand und das Auflageelement vor Einleitung des Kochvorganges eine stabile **Umgebungstemperatur** auf, so kann der erste Eichschritt vor der ersten Erwärmung durch das Induktionsgerät erfolgen. In diesem Fall kann ohne das Ausführen des oben beschriebenen Eichschrittes und einzig durch das Ermitteln der Temperatur des Auflageelementes durch den Temperatursensor und das Ermitteln der zugehörigen Resonanzfrequenz des Gegenstandes der erste Temperatureichwert bestimmt werden. Selbstverständlich muss gewährleistet sein, dass dieser Eichwert nur bei stabiler Resonanzfrequenz, d.h. stabiler Temperatur des Gegenstandes stattfindet. Der zweite Eichschritt zur Ermittlung des nächsten Eichwertes wird auf Basis eines Temperatursprungs des Gegenstandes in der oben beschriebenen Art durchgeführt.

Gemäss anders gelagerten Ausgangsbedingungen ist das Auflageelement z. B. durch einen vorangegangenen Kochvorgang erwärmt, während der Gegenstand eine tiefere Temperatur aufweist als das Auflageelement. In diesem Fall wird durch entsprechende Leistungssteuerung die Temperatur des Gegenstandes konstant gehalten. Das Auflageelement kühlt sich nun auf die Temperatur des Gegenstandes ab, was einer Sprungfunktion mit negativen Vorzeichen entspricht. Daher muss vor der Berechnung die Ableitung $y'(t)$ mit -1 multipliziert werden. Der zweite Eichschritt zur Ermittlung des nächsten Eichwertes wird auch hier auf Basis eines Temperatursprungs des Gegenstandes in der oben beschriebenen Art durchgeführt. Gemäss einer weiteren Ausgangssituation weist der Gegenstand durch eine vorangehende Erwärmung eine höhere Temperatur auf als das Auflageelement, welches z. B. Umgebungstemperatur aufweist. Dies kann z. B. der Fall sein, wenn das Kochgeschirr bereits in einem vorangegangenen Kochvorgang benutzt wurde. In diesem Fall wird durch entsprechende Steuerung der Leistungszufuhr die Resonanzfrequenz und daher die Temperatur des Gegenstandes konstant gehalten. Sobald eine stabile Resonanzfrequenz gemessen wird, kann der Eichschritt wie oben beschrieben eingeleitet werden. Der zweite Eichschritt zur Ermittlung des nächsten Eichwertes wird auch hier auf Basis eines Temperatursprungs des Gegenstandes in der oben beschriebenen Art durchgeführt.

Gemäss einer weiteren Ausgangssituation sind sowohl der Gegenstand als auch das Auflageelement bereits vor Aufnahme des Kochvorganges gegenüber der Umgebungstemperatur erwärmt. Diese Ausgangssituation kann z. B. durch einen vorangegangenen Kochvorgang verursacht sein. In diesem Fall wird durch entsprechende Steuerung der Leistungszufuhr die Resonanzfrequenz und daher die Temperatur des Gegenstandes konstant gehalten. Sobald eine stabile Resonanzfrequenz gemessen wird, kann der Eichschritt wie oben beschrieben eingeleitet werden. Der zweite Eichschritt zur Ermittlung des nächsten Eichwertes wird auch hier auf Basis eines Temperatursprungs des Gegenstandes in der oben beschriebenen Art durchgeführt.

Die Eichschritte stören den eigentlichen Erwärmungs- bzw. Kochvorgang dann am wenigsten, wenn die vorgesehene Erwärmung einen kleinen Gradienten aufweist oder die Temperatur gar konstant gehalten wird. Die Steuerungsmittel des Induktionsgerätes können daher so ausgelegt sein, dass der Eichvorgang während einer Kochphase mit geringen Temperaturänderungen durchgeführt wird, so dass dieser die Temperaturführung möglichst wenig beeinflusst.

Die Erfindung betrifft ebenfalls ein elektrisches Gerät zur induktiven Erwärmung eines Gegenstandes mit induktiven Eigenschaften, enthaltend eine elektrische Einrichtung zur induktiven Erwärmung des Gegenstandes, ein oberhalb der elektrischen Einrichtung angeordnetes Auflageelement mit einer ersten Seite, welche als Auflagefläche für den Gegenstand dient, und einer zweiten Seite, welche zur elektrischen Einrichtung hin gerichtet ist, und an welche wenigstens ein Temperatursensor angebracht ist. Der oder die Temperatursensoren sind in einem Bereich des Auflageelementes platziert, wo der zu erwärmende Gegenstand dem Auflageelement aufliegt. Dieser Bereich ist z. B. ein Kochfeld. Die elektrische Einrichtung umfasst bevorzugt Mittel zur Erzeugung eines Induktionsschwingkreises, insbesondere eine Induktionsspule.

Zur Ausführung des oben beschriebenen Eichvorganges sowie zur Bestimmung und Regelung der Temperatur des Gegenstandes ist eine Messeinrichtung zur, vorzugsweise fortlaufenden Bestimmung der temperaturabhängigen Permeabilität des Gegenstandes oder der von dieser abhängigen Resonanzfrequenz eines mit dem Gegenstand zusammenwirkenden Induktionsmessschwingkreises vorgesehen. Die Messeinrichtung zur Messung der Resonanzfrequenz enthält zweckmässig eine Messspule. Die Messspule kann eine von der Induktionsspule zur Erzeugung der Induktionsheizleistung unabhängige Spule sein. Es ist jedoch auch möglich, dass die Messspule einer zur Erzeugung der Induktionsheizleistung vorgesehenen Induktionsspule entspricht. Zur Ausführung einer Messung mit der Messspule zwecks Erfassung der besagten Resonanzfrequenz wird während der Messphase die Induktionsspule zur Erzeugung der Induktionsheizleistung deaktiviert, so dass es zu keiner gegenseitigen Störung der magnetischen Wechselfelder kommt. Da eine solche Messung in der Regel nur einen Bruchteil einer Sekunde dauert, beeinträchtigt diese Massnahme den Aufwärmvorgang nicht.

Ferner ist ein Regelkreis mit entsprechenden Programmmitteln vorgesehen, mittels welchem die Zufuhr der elektrischen Leistung zur Anregung des Induktionsschwingkreis so geregelt werden kann, dass die Resonanzfrequenz des Induktionsmessschwingkreises und dementsprechend die Temperatur des Gegenstandes auf vorgegebene Sollwerte geregelt werden kann.

Das erfindungsgemässe Induktionsgerät enthält entsprechende Steuerungs- und Programmmittel zur Ausführung des erfindungsgemässen Verfahrens. In bevorzugter Weiterbildung der Erfindung enthält das Induktionsgerät Mittel, wie Steuerungsmittel, Programmmittel, mittels welchen der Eichvorgang automatisch ausgeführt werden kann. D.h. der Benutzer braucht bei Einleitung des Kochvorganges den Eichvorgang nicht selbst zu initiieren. Vielmehr leiten die Steuerungsmittel des Induktionsgerätes den Eichvorgang automatisch ein. Die besagten Steuerungsmittel sind z. B. in der Lage, bei der Initialisierung eines Kochvorganges und bei der Identifikation eines Gegenstandes, wie Kochgeschirrs, auf dem Auflageelement, wie Kochfeld, den Eichvorgang einzuleiten. In bevorzugter Weiterbildung sind die genannten Mittel auch in der Lage, den Eichvorgang so lange wie notwendig (Anzahl Eichwerte) durchzuführen und so oft wie möglich zu wiederholen, ohne dass der Benutzer von sich aus eingreifen muss.

Bevorzugt enthält die Steuerung Programmmittel, welche mittels entsprechenden Algorithmen die Ausführung der Eichschritte auf den Verlauf der Sprungantwort anpassen. Erreicht die Sprungfunktion den Endwert in kurzer Zeit, so reichen vergleichsweise wenige Messwerte aus und der Eichvorgang ist vergleichsweise kurz. Erreicht die Sprungfunktion den Endwert relativ spät, so sind mehr Messwerte erforderlich und der Eichvorgang dauert entsprechend länger.

Es können ferner Programmmittel mit entsprechenden Algorithmen vorgesehen sein, welche ermitteln, ob die Temperaturänderung am Auflageelement schnell oder langsam erfolgt und demzufolge, ob die Sprungantwort eher einem PT1-Glied oder einem PT2-Glied entspricht. Dies ermöglicht beispielsweise den Ausschluss von Sprungantworten, welche nicht einem PT1-Glied entsprechen und daher ungenauere Eichwerte liefern. Der Verlauf der Sprungantwort kann z. B. mittels Ableitung der Sprungfunktion ermittelt werden.

Es ist selbsterklärend, dass die genannten Programmmittel zur Durchführung des erfindungsgemässen Verfahrens sowie allgemein die Regelung und Steuerung der Temperaturüberwachung unter Einsatz von elektronischen Datenverarbeitungsmitteln, z. B. Mikroprozessoren, ausgeführt werden.

Wie bereits weiter oben erwähnt, wird das in einem Induktionsgeschirr befindliche und zu erwärmende Gut mit einer zeitlichen Verzögerung zum Induktionsgeschirr und insbesondere zum Geschirrboden ebenfalls auf das höhere Temperaturniveau des Geschirrs angehoben. Eine Erhöhung der Temperatur bewirkt dementsprechend auch immer eine Erhöhung der Leistungsabgabe der elektrischen Einrichtung bzw. des Induktionsgerätes, um neben dem Induktionsgeschirr auch das in diesem Geschirr befindliche Gut auf das entsprechende Temperaturniveau anzuheben. Die hierzu abzugebende Leistung und der zeitliche Verlauf der Leistungsabgabe ist von der Menge, der Beschaffenheit und den physikalischen Eigenschaften des Gutes, wie z. B. der Wärmekapazität bzw. der benötigten thermischen Energie pro Temperaturänderung, abhängig.

Im Zusammenhang mit der oben genannten Erfindung wurde nun erkannt, dass die Erhöhung der Temperatur des Geschirrs, z. B. in Form einer Sprungfunktion, aufgrund der zeitlich verzögerten Erwärmung des im Geschirr miterwärmten Gutes eine Sprungantwort der Leistungsabgabe an das System auslöst. Die Sprungantwort zeichnet sich dadurch aus, dass bei Einleitung eines Temperatursprungs im Geschirr auch die Leistungsabgabe erhöht wird. Die Höhe der abgegebenen Leistung wird über den Leistungsbedarf definiert, welcher notwenig ist, um die Temperatur des Geschirrs bzw. Geschirrbodens auf dem höheren Temperaturniveau zu halten. So ist unmittelbar nach Ausführen des Temperatursprungs auf das höhere Temperaturniveau eine vergleichsweise hohe Leistungsabgabe erforderlich, weil viel thermische Energie vom Geschirr bzw. Geschirrboden in das noch tiefer temperierte Gut abgeleitet wird. Je mehr sich die Temperatur des Gutes der Temperatur des Geschirrs bzw. Geschirrbodens annähert, desto weniger Leistung ist erforderlich, um diese höhere Temperatur zu halten. Hat das im Geschirr befindlichen Gut einmal die Temperatur des Geschirrs bzw. Geschirrbodens erreicht, so stellt sich im Anschluss an die Sprungantwort eine konstante Leistungsabgabe auf einem gegenüber der Leistungsabgabe während der Sprungantwort tieferen Niveau ein. Die genannte Sprungantwort kann z. B. ein PT1-Glied sein.

Das Gut ist bevorzugt ein Kochgut, welches in einem Kochgeschirr einem Kochvorgang unterzogen wird. Das Gut umfasst vorzugsweise Lebensmittel bzw. Speisen.

Der zeitliche Verlauf der Leistungsabgabe sowie die total abgegebene Leistung während der Sprungantwort geben nun Auskunft über die aufgenommene thermische Energie des zu erwärmenden Gutes und somit über die Menge, die Beschaffenheit und Eigenschaften des Gutes. Ist zum Beispiel wenig Gut im Geschirr und/oder weist das Gut eine vergleichsweise kleine Wärmekapazität auf, dann ist die gesamte Leistungsabgabe geringer und die Sprungantwort zeitlich kürzer, als wenn sich z. B. viel Gut im Geschirr befindet und/oder die Wärmekapazität des Gutes gross ist.

Ausgehend von der gewonnenen Information über die Leistungsabgabe kann z. B. die Leistungsabgabe beim Kochen, insbesondere beim temperaturgesteuerten Kochen, gezielt gesteuert bzw. geregelt werden. Wenn z. B. aufgrund der mit dem oben genannten erfindungsgemässen Verfahren ermittelten Information bekannt ist, dass vergleichsweise wenig Leistung notwendig ist, um das Kochgut zu erwärmen, weil z. B. wenig Kochgut im Kochgeschirr ist und/oder dieses nur eine geringe Wärmekapazität aufweist, dann kann die Leistungsabgabe entsprechend vorsichtig dosiert werden, um z. B. ein "Überschiessen" der Energiezufuhr und der damit verbundenen Temperaturerhöhung im Kochgut zu vermeiden.

Ist jedoch aufgrund des oben genannten Verfahrens bekannt, dass vergleichsweise viel Leistung notwendig ist, um das Gut zu erwärmen, weil z. B. viel Gut im Geschirr ist und/oder dieses eine hohe Wärmekapazität aufweist bzw. viel thermische Energie pro Temperaturänderung notwendig ist, wie dies beim Auftauen der Fall ist, dann kann die Leistungsabgabe entsprechend hoch angesetzt werden, um sicherzustellen, dass das Gut möglichst schnell eine angestrebte Solltemperatur bzw. Zustand erreicht. Auf diese Weise wird z. B. verhindert, dass es bei einer zu tief angesetzten Leistungsabgabe zu lange dauert, bis das Gut die angestrebte Solltemperatur erreicht hat.

Das erfindungsgemässe Verfahren zur Ermittlung einer Information über die notwendige thermische Energie bzw. Leistung zur Erwärmung des Gutes um eine bestimmte Temperatur kann in das oben genannte Eich- bzw. Temperaturmessverfahren integriert sein. D.h., die oben ausgeführte Sprungfunktion zur Ermittlung von Temperatureichwerten kann gleichzeitig auch dazu benutzt werden, die Sprungantwort der Leistungsabgabe zu erfassen und auszuwerten.

Die Sprungfunktion zur Ermittlung der Sprungantwort der Leistungsabgabe wird auch hier bevorzugt über eine sprunghafte Erhöhung und Regelung der Resonanzfrequenz des Geschirrs, wie oben beschrieben erreicht. Für weitere diesbezügliche Details wird auf die entsprechenden Ausführungen zur Temperatureichung verwiesen. Das erfindungsgemässe Verfahren zur Ermittlung einer Information über die notwendige thermische Energie bzw. Leistung zur Erwärmung des Gutes kann übrigens auch zur Erhöhung der Genauigkeit und/oder Geschwindigkeit des erfindungsgemässen Temperatureichverfahrens hinzugezogen werden.

Das erfindungsgemässe Verfahren kann jedoch auch unabhängig vom oben beschriebenen Temperatureich- bzw. Temperaturmessverfahren angewendet werden.

Es ist überdies auch möglich, die Bestimmung des Aufnahmevermögens an thermischer Energie bzw. die damit verbundene Leistungsabgabe während eines Erwärmungsvorganges, insbesondere Kochvorganges, zu wiederholen, um z. B. einer während des Kochens veränderlichen Wärmekapazität und/oder Menge des Kochgutes Rechnung zu tragen. So ist zum Beispiel bei einem auftauenden Gut wesentlich mehr thermische Energie zur Erhöhung der Temperatur notwendig als bei einem bereits aufgetauten Gut. Wird ferner beispielsweise ein flüssiges Kochgut eingekocht bzw. reduziert, so ändert sich das Aufnahmevermögen thermischer Energie pro Temperaturänderung fortlaufend.

Die Erfassung und Auswertung der oben genannten Information über die Leistungsabgabe bzw. die aufgenommene thermische Energie in Abhängigkeit von einem Temperaturanstieg kann über entsprechende elektronische Datenverarbeitungsmittel geschehen. Ferner sind bevorzugt entsprechende Steuerungs- bzw. Regelungsmittel zur Regelung der Leistungsabgabe beim Erwärmen des Gutes unter Berücksichtigung der oben gewonnenen Informationen vorgesehen.

Das Induktionsgerät kann ein beliebiges, mit Induktion arbeitendes Gerät zum Wärmen eines mit dem Induktionsgerät in Wechselwirkung stehenden Gegenstandes sein. Der Gegenstand mit induktiven Eigenschaften ist bevorzugt ein Geschirr, insbesondere ein Kochgeschirr, zum Kochen, Erwärmen und/oder Warmhalten von Lebensmitteln bzw. Speisen. Ein guter Wärmekontakt zwischen Geschirr zum Auflageelement wirkt sich positiv auf die Eichgeschwindigkeit sowie die Genauigkeit der Eichwerte aus. Das Induktionsgerät ist bevorzugt ein Induktionskochgerät.

Das Auflageelement ist bevorzugt eine Glas-, Keramik- oder Glaskeramikplatte, welche z. B. aus einem Ceran-Glas besteht. Unterhalb des Auflageelements kann eine oder mehrere Induktionsspulen angeordnet sein, welche auf dem Auflageelement entsprechende Kochfelder definieren. D.h. im Bereich des Auflageelementes können mehrere Kochfelder liegen. Entsprechend kann auch das Induktionskochgerät mehrere Kochfelder enthalten. Das erfindungsgemässe Verfahren kann bevorzugt für jedes Kochfeld individuell und unabhängig ausgeführt werden.

Das Induktionsgerät und ggf. das Induktionsgeschirr sowie das erfindungsgemässe Verfahren können jedoch ganz allgemein zum temperaturgesteuerten Wärmen von in einem Induktionsgeschirr enthaltenen Gegenständen Einsatz finden. Das Temperatur gesteuerte Erwärmen kann hierbei zum Zweck haben, den Gegenstand Aufzutauen, Warmzuhalten oder einem Kochvorgang gemäss vorangehender Definition zu unterwerfen.

Die Erfindung wird jedoch bevorzugt zum temperaturgesteuerten Kochen auf Induktions-Kochgeräten mit berührungsloser Temperaturmessung und Temperatursteuerung in Echtzeit, wie dies unter anderem unter dem Namen RTCS® - "Realtime Temperature Control System" bekannt ist, eingesetzt. Dank der vorliegenden Erfindung muss die Temperatureichung des verwendeten Induktionsgeschirrs nicht mehr vor der Benutzung separat erfasst werden. Die Temperatureichung geschieht viel mehr zu Beginn oder während des Kochvorganges, ohne dass jedoch der Kochvorgang selbst durch den Eichvorgang behindert würde. Überdies kann die erfindungsgemässe Temperatureichung während des Kochvorganges beliebig oft wiederholt werden oder es können beliebig viele Temperatureichwerte im Rahmen des Eichvorganges ermittelt werden, um so eine im fortschreitenden Kochprozess immer präzisere Kennlinie in der Beziehung von Resonanzfrequenz und Temperatur zu erhalten. Überdies braucht das Geschirr bei der wiederholten Benutzung nicht jedes Mal vor der Benutzung identifiziert zu werden, damit die im Induktionsgerät gespeicherten und für das jeweilige Geschirr typischen Eichwerte vor Aufnahme des Kochvorganges in die Rechen- und Steuereinheit eingelesen werden müssen. Da die Temperatureichung gemäss Erfindung die Temperaturführung des laufenden Kochvorganges nicht wesentlich beeinflusst, wird das jeweilige Geschirr bei jeder Benutzung wieder von neuem geeicht. Dadurch kann auf eine Identifizierung des Geschirrs und auf einen Rückgriff auf gespeicherte Eichresultate wie oben erwähnt verzichtet werden. Der Benutzer braucht sich keine Gedanken um das eingesetzte Kochgeschirr und dessen Eichung zu machen.

Die Erfindung soll aber wie bereits erwähnt nicht auf das Gebiet des Kochens und Warmhalten bzw. Erwärmen von Speisen bzw. Lebensmittel beschränkt sein. Die Erfindung soll auch Anwendung auf anderen Gebieten binden, in welchen auf einer Auflagefläche aufliegende Gegenstände über Induktion erwärmt werden und die Temperatur des Gegenstandes möglichst in Echtzeit gesteuert werden soll.

**WEGE ZUR AUSFÜHRUNG DER ERFINDUNG**

Im Folgenden wird der Erfindungsgegenstand anhand von Figuren näher erläutert. Es zeigen jeweils schematisch:

Figur 1      eine Darstellung des Kochfeldes eines Induktionskochgerätes;

Figur 2      die graphische Darstellung der Kennlinie zwischen Temperatur des Gegenstandes und der Resonanzfrequenz eines Induktionsmessschwingkreises;

Figur 3a     die graphische Darstellung der Temperatur-Sprungantwort eines PT1-Gliedes in Abhängigkeit von der Resonanzfrequenz;

Figur 3b     eine Darstellung der Resonanzfrequenz zur Sprungantwort nach Fig. 3a;

Figur 4a     eine graphische Darstellung der Temperatur-Sprungantwort eines PT2-Gliedes in Abhängigkeit von der Resonanzfrequenz;

Figur 4b     die Darstellung der Resonanzfrequenz zur Sprungantwort nach Fig. 4a.

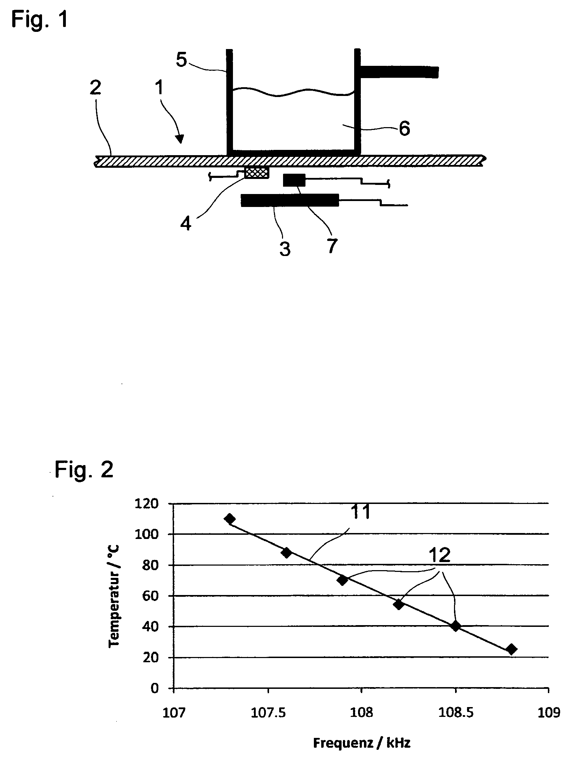

In Figur 1 ist eine schematische Anordnung zur Durchführung des erfindungsgemässen Verfahrens dargestellt. Ein Induktionskochgerät 1 umfasst eine unterhalb einer Glaskeramikplatte 2 angeordnete Induktionsspule 3 zur Erwärmung eines Kochgeschirrs 5, hier eine Pfanne, und über die Pfanne dessen Inhalt 6. Auf jener der Induktionsspule zugewandten Seite der Glaskeramikplatte 2 ist ein Temperatursensor 4 zur Messung der Temperatur der Glaskeramikplatte 2 angeordnet. Grundsätzlich können pro Kochfeld auch mehrere Temperatursensoren vorgesehen sein. Zur Durchführung des Eichvorganges kann das Induktionsgerät beispielsweise den oder die am besten geeigneten Temperatursensor auswählen. Die anderen Sensoren können ignoriert werden. Ob sich ein Temperatursensor eignet hängt davon ab, ob das Kochgeschirr auch tatsächlich über diesem Temperatursensor liegt, und ob das Kochgeschirr im Bereich des betreffenden Temperatursensors gut wärmeleitend der Glaskeramikplatte 2 aufliegt. Der Einbezug bzw. die Auswertung der Temperaturmesswerte von mehreren an verschiedenen Orten platzierten Temperatursensoren verbessert die Zuverlässigkeit und Stabilität des Verfahrens. Ferner ist unterhalb der Glaskeramikplatte 2 im Bereich der Induktionsspule 3 auch die Messspule 7 der Messeinrichtung zur Messung der Resonanzfrequenz eines Induktionsmessschwingkreises angeordnet.

Figur 2 zeigt eine Graphik, in welcher zu bestimmten Resonanzfrequenzen ermittelte Temperatureichwerte 12 eingetragen sind. Über eine Approximationsmethode wurde aus den gewonnenen Eichwerten 12 die Kennlinie 11 bzw. die dazugehörige lineare Funktion ermittelt. Je genauer die Eichwerte 12 sind, desto näher liegen diese an der Kennlinie 11. Das Ziel der automatischen Temperatureichung ist letztendlich immer, möglichst schnell den linearen Zusammenhang zwischen der Temperatur und der Resonanzfrequenz zu erkennen. Sobald dieser Zusammenhang mit einer genügenden Genauigkeit ermittelt worden ist, ist ein Temperatur gesteuertes Kochen möglich.

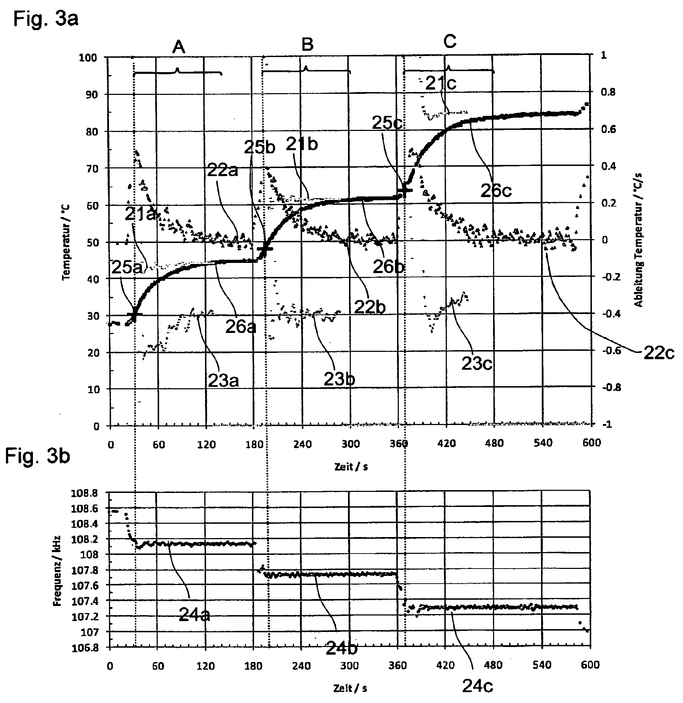

Figur 3a und 3b zeigt einen Eichvorgang in Bezug auf eine Anordnung nach Figur 1. Im vorliegenden Beispiel liegt ein idealer thermischer Kontakt zwischen der Glaskeramikplatte und Kochgeschirr vor. Der Eichvorgang umfasst die Ermittlung von drei Temperatureichwerten aus drei Eichschritten A-C. Jeder Eichschritt A-C ist mit der Erwärmung des Kochgeschirrs auf ein nächst höheres und konstant gehaltenes Temperaturniveau verbunden. Dieses wird durch die in Figur 3b gezeigten Resonanzfrequenzen des Schwingkreises wiedergegeben, welche jeweils bei Einleiten eines Temperaturschrittes auf ein tieferes Niveau sprunghaft abnehmen und sich auf dem tieferen Niveau wieder einpendeln und konstant bleiben. Bei Einleiten eines solchen Temperatursprunges reagiert die Temperatur der Glaskeramikplatte wie ein PT1-Glied (Gleichung 1), wie dies in Figur 3a anschaulich am zeitlichen Verlauf der Temperaturmesswerte 26a..c des Temperatursensors dargestellt ist. Der jeweilige Eichschritt wird erst zu einem Zeitpunkt 25a..c eingeleitet, bei welchem die Resonanzfrequenz 24a..c sich auf einen konstanten Wert eingestellt hat. Daher werden in diesem Beispiel die ersten Temperaturmesswerte erst mit einer gewissen Verzögerung, d.h. nach dem der durch den Temperatursensor erfasste Temperaturanstieg bereits eingesetzt hat, in die Berechnungen miteinbezogen.

Der jeweilige Endwert der Temperaturmesswerte 26a..c eines Eichschrittes, welcher der Temperatur des Kochgeschirrs entspricht, wird gemäss obiger Anleitung fortlaufend aus den Temperaturmesswerten 26a..c neu berechnet. Die errechneten Endwerte 21a..c sind ebenfalls in Figur 3a dargestellt. Mit zunehmender Anzahl Temperaturmesswerte 26a..c nähern sich die errechneten Endwerte 21a..c immer mehr an den tatsächlichen Endwert an. Sobald die errechneten Endwerte 21a..c sich genügend eingependelt haben, wird der Eichschritt abgebrochen und der nächste Eichschritt eingeleitet oder der Eichvorgang gestoppt. Zur Festlegung des Zeitpunktes, wann sich der berechnete Endwert in genügender Genauigkeit dem effektiven Endwert angenähert hat sind Programmmittel vorgesehen, welche mit entsprechenden Algorithmen den Verlauf der errechneten Endwerte analysieren. Entscheidungskriterien sind z. B. das Mass der Streuung der Werte um einen Mittelwert. Sobald die Streuung der berechneten Endwerte auf ein Minimum abgenommen hat, ist dies ein Hinweis, dass der berechnete Endwert in der Nähe des effektiven Endwertes liegt. So wird beispielsweise gemäss Figur 3a-b beim Eichschritt A bereits nach rund 15s der Endwert mit einer genügenden Genauigkeit errechnet. Beim Eichschritt C dauert es rund 30s. Dies liegt daran, dass es beim dritten Sprung länger dauert, bis sich die Resonanzfrequenz auf einen konstanten Wert eingestellt hat.

Bei idealen Bedingungen, d.h. bei idealem Wärmeleitkontakt zwischen Kochgeschirr und Glaskeramikplatte, ist eine Temperatureichung bereits innerhalb von 30s möglich. Dies ist dann der Fall, wenn sowohl das Kochgeschirr als auch die Glaskeramikplatte Umgebungstemperatur haben und der erste Eichwert aus den Ausgangsbedingungen wie oben erläutert, abgeleitet werden kann. Der zweite Eichwert liegt dann nach rund 20s vor. Bei ungünstigeren Bedingungen kann die Eichung bis 60s dauern.

Die Punkte 22a..c zeigen ferner die erste Ableitung $y'(t)$ der rechnerisch ermittelten Temperaturmesswerte. Die Punkte 23a..c zeigen den fortlaufend approximativ berechneten Wert T.

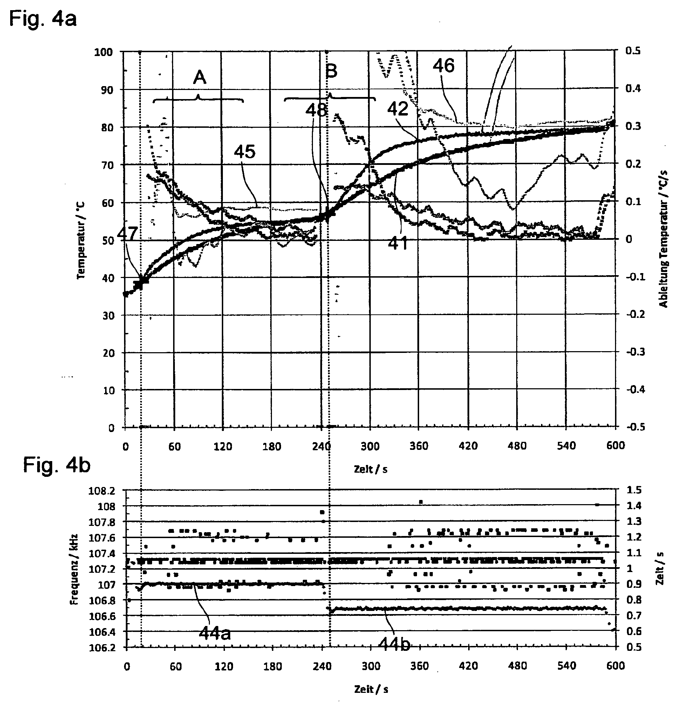

Die Figur 4a-b zeigen die Sprungantwort von zwei verschiedenen Temperaturmesssensoren als Reaktion auf eine zweimalige, sprunghafte Erhöhung der Temperatur des Kochgeschirrs. In beiden Fällen stellt sich die Resonanzfrequenz wie in Figur 4b gezeigt jeweils auf einen konstanten Wert 44a bzw. 44b ein. Im Gegensatz zur Anordnung nach Figur 3a-b kontaktiert das Kochgeschirr die Glaskeramikplatte im Bereich eines ersten Temperatursensors deutlich schlechter. Dieser Temperatursensor liefert die erste Temperaturmesskurve 41. Im Bereich eines zweiten Temperatursensors, welcher eine zweite Temperaturmesskurve 42 liefert, ist der Kontakt bereits besser, jedoch immer noch schlechter als in der Anordnung gemäss Figur 3a. Der schlechtere Kontakt führt dazu, dass die Sprungantwort einen wesentlichen flacheren und verzögerten Verlauf aufweist und es daher länger dauert bis der effektive Endwert erreicht wird. Um einen genügend genauen Endwert errechnen zu können, werden bei einer solchen Anordnung wesentlich mehr Temperaturmesswerte benötigt, was eine entsprechend längere Messphase bedingt. So dauert es zum Beispiel beim Eichschritt A (Startpunkt 47) rund 45s (berechnete Endwerte 45) und beim Eichschritt B (Startpunkt 48) rund 120s Messzeit (berechnete Endwerte 46), bis ein genügend genauer Endwert errechnet wird. Hierbei gilt zu beachten, dass jeweils der nächste Temperatursprung bereits vor Erreichen der Endtemperatur vorgenommen wurde, so dass die Temperaturmesswerte der Kurven 41 und 42 die jeweilige Endtemperatur nicht wiedergeben.

Für eine möglichst schnelle Temperatureichung ist es daher wichtig, dass wenigstens im Bereich des Temperatursensors ein guter Wärmekontakt zwischen Kochgeschirr und Glaskeramikplatte besteht. Daher ist es von Vorteil, die Temperatursensoren jeweils in Bereichen des Kochfeldes zu platzieren, in welchen das Geschirr einen möglichst guten Wärmeleitkontakt zur Glaskeramikplatte hat. Dies kann z. B. im Randbereich des Kochfeldes sein, da der Boden des Kochgeschirrs häufig in der Mitte durchgebogen ist und einen schlechten oder gar keinen Kontakt zur Glaskeramikplatte aufweist. Bevorzugt werden mehrere Temperatursensoren in unterschiedlichen radialen Abständen zum Mittelpunkt des Kochfeldes angeordnet. Auf diese Weise liegt immer ein Temperatursensor in einem Bereich mit gutem Wärmekontakt zum Kochgeschirr. Ferner trägt eine solche Anordnung auch unterschiedlich grossem Kochgeschirr Rechnung. Bei mehreren Temperatursensoren können die Steuerungsmittel des Induktionsgeräts die Sprungantworten der einzelnen Temperatursensoren auswerten und nur Temperaturmesswerte desjenigen oder diejenigen Temperatursensoren für einen Eichvorgang oder Eichschritt hinzuziehen, welche schnelle Sprungantwort aufweisen und daher eher einem PT1-Glied entsprechen. Der Temperatursensor kann ein Pt-Sensor, wie Pt1000-Sensor, sein.

**BEZUGSZEICHENLISTE**

| | |
|---|---|
| 1 | Induktionskochgerät |
| 2 | Glaskeramikplatte |
| 3 | Induktionsspule |
| 4 | Temperatursensor |
| 5 | Pfanne |
| 6 | Inhalt |
| 7 | Messspule |
| 11 | Kennlinie |
| 12 | Temperatureichwerte |
| 21 a..c | fortlaufend rechnerisch ermittelter Endwert der Temperatur |
| 22a..c | Die erste Ableitung $y'(t)$ der rechnerisch ermittelten Temperaturmesswerte |
| 23a..c | fortlaufend approximativ errechnete Wert T |
| 24a..c | Resonanzfrequenzen |
| 25a..c | Startpunkt für die Einleitung eines Eichschrittes |
| 26a..c | Temperaturmesswerte des Temperatursensors |
| 41 | erste Temperaturmesskurve |
| 42 | zweite Temperaturmesskurve |
| 44a..b | Resonanzfrequenzen |
| 45 | fortlaufend rechnerisch ermittelter Endwert der Temperatur |

46 fortlaufend rechnerisch ermittelter Endwert der Temperatur
47 Startpunkt für die Einleitung eines Eichschrittes
48 Startpunkt für die Einleitung eines Eichschrittes

**Patentansprüche**

1. Verfahren zur Ermittlung der Temperatur eines Gegenstandes (5) mit induktiven Eigenschaften, welcher mittels einer elektrischen Einrichtung (3) induktiv erwärmt wird, wobei oberhalb der elektrischen Einrichtung (3) ein Auflageelement (2) angeordnet ist, welches eine Auflagefläche für den Gegenstand (5) ausbildet, wobei die Temperatur des Gegenstandes (5) mittels einer Messeinrichtung (7) durch Messen einer Resonanzfrequenz eines mit dem Gegenstand (5) zusammenwirkenden Induktionsmessschwingkreises bestimmt wird, wobei die Resonanzfrequenz von der temperaturabhängigen Permeabilität des Gegenstandes (5) abhängig ist, und aus der gemessenen Resonanzfrequenz die Temperatur des Gegenstandes (5) berechnet wird, wobei die Resonanzfrequenz über eine mathematische Funktion in einer physikalischen Beziehung mit der Temperatur des Gegenstandes (5) steht, und wobei die mathematische Funktion die Temperatur (T) und die Resonanzfrequenz (F) als Variabeln enthält,
und mittels wenigstens einem am Auflageelement (2) angebrachten Temperatursensors (4) die Temperatur des Auflageelementes (2) gemessen wird,
und mit Temperaturmesswerten des Temperatursensors (4) die mathematische Funktion, welche die Beziehung zwischen der Temperatur und der Resonanzfrequenz des Gegenstandes (5) definiert, ermittelt wird, indem wenigstens zwei absolute Temperatureichwerte des Gegenstandes (5) bei jeweils unterschiedlichen Resonanzfrequenzen ermittelt werden, so dass sich über die aus den Temperaturmesswerten ermittelte Beziehung die Temperatur des Gegenstandes (5) aus den gemessenen Resonanzfrequenzen bestimmen lässt,
**dadurch gekennzeichnet, dass**
wenigstens ein Temperatureichwert des Gegenstandes (5) durch folgende Schritte ermittelt wird:

   - Erwärmen des Gegenstandes (5) auf ein höheres Temperaturniveau und konstant halten der Temperatur auf diesem Niveau;
   - wenigstens einmaliges Messen der Temperatur am Auflageelement (2) durch den wenigstens einen Temperatursensor (4) zu einem Zeitpunkt, bei welchem die Temperatur konstant auf dem höheren Temperaturniveau gehalten wird;
   - Berechnen des Temperatureichwertes, wobei der Berechnung ein lineares, zeitinvariantes System (LZI-System) zugrunde gelegt wird, mittels welchem der Temperatureichwert als Ausgangsgrösse einer Übertragungsfunktion des LZI-Systems aus wenigstens einem vom Temperatursensor (4) am Auflageelement gemessenen Temperaturwert als Eingangsgrösse der Übertragungsfunktion berechnet wird.

2. Verfahren gemäss Anspruch 1, **gekennzeichnet durch** die Schritte:

   - Erwärmen des Gegenstandes (5) auf ein höheres Temperaturniveau und konstant halten der Temperatur auf diesem Niveau;
   - mehrmaliges Messen der Temperatur am Auflageelement (2) **durch** den wenigstens einen Temperatursensor (4) über eine Zeitperiode hinweg, bei welcher die Temperatur konstant auf dem höheren Temperaturniveau gehalten wird;
   - Berechnen des Temperatureichwertes, wobei der Berechnung ein lineares, zeitinvariantes System (LZI-System) zugrunde gelegt wird, mittels welchem der Temperatureichwert als Ausgangsgrösse der Übertragungsfunktion des LZI-Systems aus mehreren in zeitlichem Abstand voneinander vom Temperatursensor (4) am Auflageelemente gemessenen Temperaturwerten als Eingangsgrössen der Übertragungsfunktion berechnet wird.

3. Verfahren gemäss einem der Ansprüche 1 bis 2, **dadurch gekennzeichnet, dass** die Erhöhung der Temperatur des Gegenstandes (5) in Form einer Sprungfunktion vorliegt, so dass die vom Temperatursensor (4) wenigstens eine gemessene Temperatur am Auflageelement (2) der Sprungantwort auf die Sprungfunktion entspricht.

4. Verfahren gemäss einem der Ansprüche 1 bis 3, **dadurch gekennzeichnet, dass** die Übertragungsfunktion eine Sprungantwort in Form eines PT1-Gliedes oder eines PT2-Gliedes ist.

5. Verfahren gemäss Anspruch 3 oder 4, **dadurch gekennzeichnet, dass** der Temperatureichwert, welcher dem Endwert der Sprungantwort entspricht, aus Temperaturmesswerten, welche den Eingangsgrössen der Sprungantwort entsprechen, berechnet wird bevor der Endwert der Sprungantwort erreicht wird.

6. Verfahren gemäss Anspruch 5, **dadurch gekennzeichnet, dass** der Endwert der Sprungantwort aus einer Mehrzahl von Temperaturmesswerten durch ein Approximationsverfahren ermittelt wird.

7. Verfahren gemäss Anspruch 6, **dadurch gekennzeichnet, dass** das Approximationsverfahren ein Iterationsverfahren ist.

8. Verfahren gemäss Anspruch 6, **dadurch gekennzeichnet, dass** das Approximationsverfahren ein Verfahren nach der Methode der kleinsten Quadrate ist.

9. Verfahren gemäss einem der Ansprüche 2 bis 8, **dadurch gekennzeichnet, dass** der Temperatureichwert über einen Zeitabschnitt hinweg wiederholt mittels der Übertragungsfunktion aus den jeweils zuvor gemessenen Temperaturwerten berechnet wird, und die Berechnungen solange fortgeführt werden, bis diese einen genügend genau an die Ausgangsgrösse bzw. den Endwert der Übertragungsfunktion angenäherten Temperatureichwert ergeben.

10. Verfahren gemäss einem der Ansprüche 1 bis 9, **dadurch gekennzeichnet, dass** das konstant halten der Temperatur des Gegenstandes im Anschluss an eine Temperaturerhöhung durch konstant halten der Resonanzfrequenz über einen Regelkreis geschieht.

11. Verfahren gemäss einem der Ansprüche 1 bis 10, **dadurch gekennzeichnet, dass** mehrere Temperatureichwerte berechnet werden und die durch die mathematische Funktion definierte Beziehung zwischen Temperatur des Gegenstandes (5) und der Resonanzfrequenz über ein Approximationsverfahren bestimmt wird.

12. Verfahren gemäss einem der Ansprüche 1 bis 11, **dadurch gekennzeichnet, dass** die Temperatureichwerte während des Erwärmens des Gegenstandes (5), vorzugsweise bei Beginn der Erwärmung des Gegenstandes (5), ermittelt werden und nach Ermittlung der Eichwerte, die Regelung der Temperatur des Gegenstandes (5) über die Regelung der Resonanzfrequenz erfolgt.

13. Verfahren gemäss einem der Ansprüche 1 bis 12, **dadurch gekennzeichnet, dass** der Gegenstand (5) ein Geschirr, insbesondere ein Kochgeschirr, zum Kochen, Erwärmen, Auftauen und/oder Warmhalten von Lebensmitteln ist.

14. Elektrisches Gerät (1) zur Erwärmung eines Gegenstandes mit induktiven Eigenschaften, enthaltend:

    - eine elektrische Einrichtung (3) zur Erwärmung des Gegenstandes;
    - ein oberhalb der elektrischen Einrichtung (3) angeordnetes Auflageelement (2), welches eine Auflagefläche für den Gegenstand (5) ausbildet,
    - wenigstens einen am Auflageelement (2) angebrachten Temperatursensor (4);
    - eine Messeinrichtung (7) zur Bestimmung einer Resonanzfrequenz eines mit dem Gegenstand (5) zusammenwirkenden Induktionsmessschwingkreises, welche von der temperaturabhängigen Permeabilität des Gegenstandes (5) abhängig ist,

    **gekennzeichnet durch**

    - elektronische Datenverarbeitungsmittel zur Bestimmung und Regelung der Temperatur des Gegenstandes (5), wobei die elektronischen Datenverarbeitungsmittel Programmmittel zur Durchführung des Verfahrens nach einem der Ansprüche 1 bis 13 enthalten.

15. Elektrisches Gerät nach Anspruch 14, **dadurch gekennzeichnet, dass** das elektrische Gerät (1) Regelungsmittel zur Regelung der temperaturabhängigen Permeabilität bzw. der Resonanzfrequenz über die Leistungsabgabe an den Induktionsschwingkreis enthält.

**Claims**

1. A method for determining the temperature of an object (5) with inductive properties and which is inductively heated by way of an electrical device (3), wherein a rest element (2) which forms a rest surface for the object (5) is arranged above the electric device (3), wherein the temperature of the object (5) is determined by way of a measuring device (7) by way of measuring a resonant frequency of an induction measuring resonant circuit interacting with the object (5), wherein the resonant frequency is dependent on the temperature-dependent permeability of the object (5), and the temperature of the object (5) is computed from the measured resonant frequency, wherein the resonant frequency is in a physical relation with the temperature of the object (5) by way of a mathematical function, and wherein the mathematical function comprises the temperature (T) and the resonant frequency (F) as variables,

and the temperature of the rest element (2) is measured by way of at least one temperature sensor (4) which is attached on the rest element (2),

and the mathematic function which defines the relation between the temperature and the resonant frequency of the object (5) is determined by temperature readings of the temperature sensor (4), by way of at least two absolute temperature calibration values of the object (5) being determined at different resonant frequencies in each case, so that the temperature of the object (5) can be determined from the measured resonant frequencies by way of the relation determined from the temperature readings,

**characterised in that**

at least one temperature calibration value of the object (5) is determined by the following steps:

- heating the object (5) to a higher temperature level and keeping the temperature constant at this level;
- measuring the temperature on the rest element (2) at least once, by way of the at least one temperature sensor (4), at a point in time, at which the temperature is held constant at the higher temperature level;
- computing the temperature calibration value, wherein a linear, time-invariant system (LTI system) forms the basis of the computation, by way of which the temperature calibration value as the output variable of a transfer function of the LTI system is computed from at least one temperature value measured by the temperature sensor (4) on the rest element, as the input variable of the transfer function.

2. A method according to claim 1, **characterised by** the steps:

- heating the object (5) to a higher temperature level and keeping the temperature constant at this level;
- measuring the temperature on the rest element (2) several times by way of the at least one temperature sensor (4), over a time period, at which the temperature is held constant at the higher temperature level;
- computing the temperature calibration value, wherein a linear, time-invariant system (LTI system) forms the basis of the computation, by way of which the temperature calibration value as the output variable of a transfer function of the LTI system is computed from several temperature values measured at a time interval to one another by the temperature sensor (4) on the rest element, as the input variables of the transfer function.

3. A method according to one of the claims 1 to 2, **characterised in that** the increase of the temperature of the object (5) is present in the form of a step function, so that the at least one temperature on the rest element (2) and which is measured by the temperature sensor (4) corresponds to the step response to the step function.

4. A method according to one of the claims 1 to 3, **characterised in that** the transfer function is a step response in the form of a PT1 element or a PT2 element.

5. A method according to claim 3 or 4, **characterised in that** the temperature calibration value which corresponds to the final value of the step response, is computed from temperature readings corresponding to the input variables of the step response, before the final value of the step response is reached.

6. A method according to claim 5, **characterised in that** the final value of the step response is determined from a plurality of temperature readings by an approximation method.

7. A method according to claim 6, **characterised in that** the approximation method is an iteration method.

8. A method according to claim 6, **characterised in that** the approximation method is a method according to the method of least squares.

9. A method according to one of the claims 2 to 8, **characterised in that** the temperature calibration value is repeatedly computed over a time interval by way of the transfer function, from the respective previously measured temperature values, and the computations are continued until these result in an temperature calibration value which is approximated in a sufficiently accurate manner to the output variable, i.e. the final value of the transfer function.

10. A method according to one of the claims 1 to 9, **characterised in that** the keeping-constant of the temperature of the object subsequently to a temperature increase is effected by way of holding the resonant frequency constant by way of a control loop.

11. A method according to one of the claims 1 to 10, **characterised in that** several temperature calibration values are computed and the relation between the temperature of the object (5) and the resonant frequency which is defined by the mathematical function is determined via an approximation method.

12. A method according to one of the claims 1 to 11, **characterised in that** the temperature calibration values are determined during the heating of the object (5), preferably at the beginning of the heating of the object (5), and the closed loop control of the temperature of the object (5) is effected via the closed-loop control of the resonant frequency, after determining the calibration values.

13. A method according to one of the claims 1 to 12, **characterised in that** the object (5) is a dishware piece, in particular a cookware piece, for cooking, heating, thawing, and/or keeping food warm.

14. An electrical appliance (1) for heating an object with inductive properties, comprising:

 - an electrical device (3) for heating the object;
 - a rest element (2) which is arranged above the electrical device (3) and which forms a rest surface for the object (5),
 - at least one temperature sensor (4) which is attached on the rest element (2);
 - a measuring device (7) for determining a resonant frequency of an induction measuring resonant circuit which interacts with the object (5), said resonant frequency being dependent on the temperature-dependent permeability of the object (5),

 **characterised by**

 - electronic data processing means for determining and the closed-loop control of the temperature of the object (5), wherein the electronic data processing means comprise program means for carrying out the method according to one of the claims 1 to 13.

15. An electrical appliance according to claim 14, **characterised in that** the electrical appliance (1) comprises closed loop control means for the closed loop control of the temperature-dependent permeability or of the resonant frequency via the power release to the induction resonant circuit.

**Revendications**

1. Méthode de détermination de la température d'un objet (5) avec des propriétés inductives, lequel objet est chauffé par induction au moyen d'un dispositif électrique (3), dans laquelle un élément d'appui (2) qui forme une surface de repos pour l'objet (5) est placé au-dessus du dispositif électrique (3), dans laquelle la température de l'objet (5) est déterminée au moyen d'un dispositif de mesure (7) au moyen de la mesure d'une fréquence de résonance d'un circuit résonnant mesurant l'induction interagissant avec l'objet (5), dans laquelle la fréquence de résonance est dépendante de la perméabilité dépendante de la température de l'objet (5), et la température de l'objet (5) est calculée à partir de la fréquence de résonance mesurée, dans laquelle la fréquence de résonance se trouve dans une relation physique avec la température de l'objet (5) au moyen d'une fonction mathématique, et dans laquelle la fonction mathématique comprend la température (T) et la fréquence de résonance (F) en tant que variables, et la température de l'élément d'appui (2) est mesurée au moyen d'au moins un capteur de température (4) qui est fixé sur l'élément d'appui (2), et la fonction mathématique qui définit la relation entre la température et la fréquence de résonance de l'objet (5) est déterminée par les lectures de température du capteur de température (4), au moyen d'au moins deux valeurs absolues d'étalonnage de la température de l'objet (5) qui sont déterminées aux différentes fréquences de résonance dans chaque cas, de sorte que la température de l'objet (5) peut être déterminée à partir des fréquences de résonance mesurées au moyen de la relation déterminée à partir des lectures de température, **caractérisée en ce que** au moins une valeur d'étalonnage de la température de l'objet (5) est déterminée par les étapes suivantes :

 - chauffage de l'objet (5) à une température plus élevée et conservation de la température constante à ce niveau ;

- mesure de la température sur l'élément d'appui (2) au moins une fois, au moyen du au moins un capteur de température (4), à un moment précis, auquel la température est maintenue constante à la température plus élevée ;
- calcule de la valeur d'étalonnage de la température, dans laquelle un système linéaire invariant dans le temps (système LTI) forme la base du calcul, au moyen duquel la valeur d'étalonnage de la température comme variable de sortie d'une fonction de transfert du système linéaire invariant dans le temps est calculée à partir d'au moins une valeur de la température mesurée par le capteur de température (4) sur l'élément d'appui, comme la variable d'entrée de la fonction de transfert.

2.  Méthode selon la revendication 1, **caractérisée par** les étapes de :

- chauffage de l'objet (5) à une température plus élevée et conservation de la température constante à ce niveau ;
- mesure de la température sur l'élément d'appui (2) plusieurs fois au moyen du au moins un capteur de température (4), sur une période donnée, au cours de laquelle la température est maintenue constante à la température plus élevée ;
- calcul de la valeur d'étalonnage de la température, dans laquelle un système linéaire invariant dans le temps (système LTI) forme la base du calcul, au moyen duquel la valeur d'étalonnage de la température comme variable de sortie d'une fonction de transfert du système linéaire invariant dans le temps est calculée à partir de plusieurs valeurs de la température mesurées à un intervalle de temps les unes des autres par le capteur de température (4) sur l'élément d'appui, comme les variables d'entrée de la fonction de transfert.

3.  Méthode selon l'une quelconque des revendications 1 à 2, **caractérisée en ce que** l'augmentation de la température de l'objet (5) est présente sous la forme d'une fonction échelon, de sorte que la au moins une température sur l'élément d'appui (2) qui est mesurée par le capteur de température (4) correspond à la réponse échelon à la fonction échelon.

4.  Méthode selon l'une quelconque des revendications 1 à 3, **caractérisée en ce que** la fonction de transfert est une réponse échelon sous la forme d'un élément PT1 ou un élément PT2.

5.  Méthode selon la revendication 3 ou 4, **caractérisée en ce que** la valeur d'étalonnage de la température, qui correspond à la valeur finale de la réponse échelon, est calculée à partir des lectures de la température qui correspondent aux variables de sortie de la réponse échelon, avant que la valeur finale de la réponse échelon soit atteinte.

6.  Méthode selon la revendication 5, **caractérisée en ce que** la valeur finale de la réponse échelon est déterminée à partir d'une pluralité de lectures de températures par une méthode d'approximation.

7.  Méthode selon la revendication 6, **caractérisée en ce que** la méthode d'approximation est une méthode d'itération.

8.  Méthode selon la revendication 6, **caractérisée en ce que** la méthode d'approximation est une méthode selon la méthode des moindres carrés.

9.  Méthode selon l'une quelconque des revendications 2 à 8, **caractérisée en ce que** la valeur d'étalonnage de la température est calculée de manière répétitive sur un intervalle de temps au moyen d'une fonction de transfert, à partir des valeurs de température respectives précédemment mesurées, et les calculs sont poursuivis jusqu'à ce qu'ils se soldent par une valeur d'étalonnage de la température qui est arrondie d'une manière suffisamment précise à la variable de sortie, c.-à-d., la valeur finale de la fonction de transfert.

10. Méthode selon l'une quelconque des revendications 1 à 9, **caractérisée en ce que** la conservation de la constance de la température de l'objet ultérieurement à une augmentation de la température est réalisée au moyen d'un maintien de la constance de la fréquence de résonance au moyen d'une boucle de commande.

11. Méthode selon l'une quelconque des revendications 1 à 10, **caractérisée en ce que** de nombreuses valeurs d'étalonnage de la température sont calculées et la relation entre la température de l'objet (5) et la fréquence de résonance qui est définie par la fonction mathématique est déterminée par une méthode d'approximation.

12. Méthode selon l'une quelconque des revendications 1 à 11, **caractérisée en ce que** les valeurs d'étalonnage de la température sont déterminées pendant le chauffage de l'objet (5), de préférence au début du chauffage de l'objet (5), et la commande de boucle fermée de la température de l'objet (5) est réalisée par la commande de boucle fermée de la fréquence de résonance, après la détermination des valeurs d'étalonnage.

13. Méthode selon l'une quelconque des revendications 1 à 12, **caractérisée en ce que** l'objet (5) est un contenant, en particulier un contenant de cuisine, pour cuire, chauffer, dégeler et/ou conserver les aliments chauds.

14. Appareil électrique (1) pour chauffer un objet avec des propriétés inductives, comprenant :

   - un dispositif électrique (3) pour chauffer l'objet ;
   - un élément d'appui (2) qui est placé au-dessus du dispositif électrique (3) et qui forme une surface d'appui pour l'objet (5) ;
   - au moins un capteur de température (4) qui est fixé à l'élément d'appui (2) ;
   - un dispositif de mesure (7) pour déterminer une fréquence de résonance d'un circuit résonnant qui mesure l'induction laquelle interagit avec les objets (5), ladite fréquence de résonance étant dépendante de la perméabilité dépendante de la température de l'objet (5), **caractérisée par**
   - un moyen de traitement des données électroniques pour la détermination et la commande de boucle fermée de la température de l'objet (5), dans lequel le moyen de traitement des données électroniques comprend un moyen de programme destiné à mettre en oeuvre la méthode selon l'une quelconque des revendications 1 à 13.

15. Appareil électrique selon la revendication 14, **caractérisé en ce que** l'appareil électrique (1) comprend un moyen de commande de boucle fermée pour la commande de boucle fermée de la perméabilité dépendante de la température ou de la fréquence de résonance par la libération de courant vers le circuit résonnant à induction.

## Fig. 1

## Fig. 2

Fig. 3a

Fig. 3b

## Fig. 4a

## Fig. 4b

**EP 2 661 944 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090252197 A1
- EP 1420613 A